# EUROPEAN PATENT SPECIFICATION

(11) **EP 3 544 114 B1**
(45) Date of publication and mention of the grant of the patent: **03.05.2023**
(21) Application number: 18290021.7
(22) Date of filing: 20.03.2018
(51) Int. Cl.: H01Q 1/22, G06K 7/10

(54) **RESONANT RADIO FREQUENCY CONNECTION VERIFICATION SYSTEM**
RESONANZ-HOCHFREQUENZ-VERBINDUNGSVERIFIZIERUNGSSYSTEM
SYSTÈME DE VÉRIFICATION DE CONNEXION RADIO FRÉQUENCE DE RÉSONANCE

(43) Date of publication of application: 25.09.2019
(73) Proprietor: A. Raymond et CIE-SCS, 38000 Grenoble (FR)
(72) Inventor: Fräulin, Christian, 79183 Waldkirch (DE); Grether, Urs, 79400 Kandern (DE); MBAYE, Mansour, 38100 Grenoble (FR)
(74) Representative: König Szynka Tilmann von Renesse Patentanwälte Partnerschaft mbB Düsseldorf

(56) References cited:
- WO-A2-2015/184460
- FR-A1- 2 887 955
- US-A1- 2012 126 949

## Description

### BACKGROUND

Verifying the assembly of components during production has always presented a challenge to an assembly team. For example, a fastening clip may be attached to a vehicle in a place not visibly accessible, as is the case of a side airbag attached via an airbag clip to a B-pillar of a vehicle. Other examples requiring assembly verification may include, but are not limited to, quick connector locking verification, verification of the establishment of an electrical connection, and verification of a physical connection between a male or female end of a wiring harness to the corresponding mated end of an electrical connector. An incomplete connection, in any of these cases, may lead to an unsafe condition: Typically, the confirmation of the fastening or connection has relied upon visual observation or a clicking sound when the connection is made. However, if the fastener or connection is not observable by the assembler, or the connection is underneath a panel, some other means is required to verify the connection. Additionally, the verification process can be a drawn-out and tedious endeavor when a large number of connections have to be verified.

Radio Frequency Identification (RFID) uses electromagnetic fields to automatically identify and track tags and objects with tags attached. The tags contain electronically stored information, which can include a unique identification or a serial number assigned to each tag which allows an RFID tag reader to differentiate and identify each tag. Passive tags collect energy from a nearby RFID reader's interrogating radio waves. Active tags have a local power source, such as a battery, and may operate at hundreds of meters from the RFID reader. Unlike a barcode, the tag need not be within the line of sight of the reader, so it may be embedded in a tracked object. Therefore, an RFID tag attached to a vehicle during production can be used to track the vehicle's progress through an assembly line.

An assembly verification approach for a fluid quick connector is found in US7244142, assigned to Piolax Inc., wherein a standard RFID tag is attached to the quick connector locking element. The locking of the quick connector, upon insertion of a fluid line endform, closes a circuit between the initially open circuit of the locking element/RFID tag combination and an electrical pathway disposed of on the body of the connector. The disadvantage of this verification approach is the lack of a detectable signal when the locking element is unlocked, which prevents the identification of a disruption to the verification system that could prevent proper functioning when the locking element is fully engaged.

Newer, more advanced, RFID tags include the RFID integrated circuit (IC) from RFMicron, called the Magnus^{®} S2. The combination Of the Magnus^{®} S2 chip and an antenna provides a fully-functional wireless passive sensor, capable of providing capturable readouts to an RFID reader when the circuit, in which this wireless passive sensor is included, is either open or closed. A functionality not found in the standard RFID prior art.

The RFMicron RFID IC has an adaptive RFID front end which automatically adjusts the input impedance of the IC to optimally tune the tag to varying frequencies and environmental conditions. The RFMicron RFID IC provides the user access to a 5-bit sensor code and provides a direct measure of the antenna's impedance. Based on the chosen antenna design and the effect of the environment on the impedance, changes in the sensor code indicate a change in the environment.

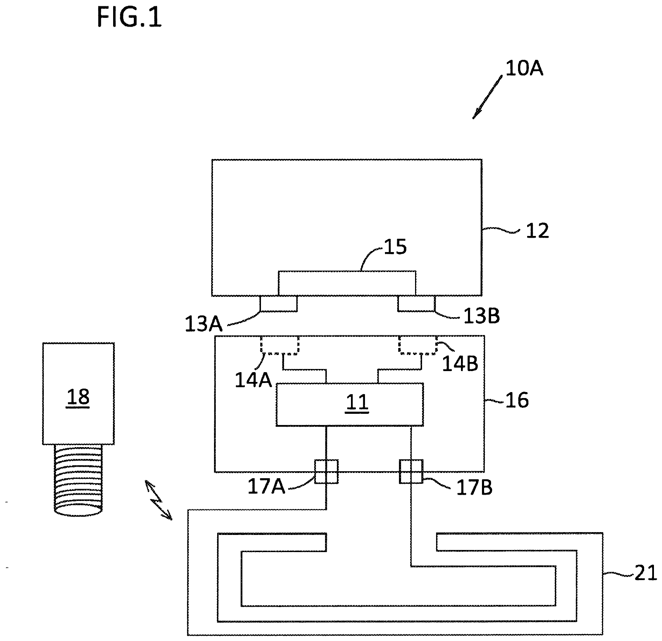

An additional advanced RFID tag is the UCODE G2il series transponder ICs from NXP. This RFID IC permits the user to give every RFID IC its own unique serial identifiers (UIDs) embedded into the RFID tag. The flexibility of this RFID IC allows it to be used as a tamper alarm, RF field detector and digital switch. Notably, the NXP G2il ICs includes 2 pairs of input pins (compared to the RFMicron Magnus^{®} S2, which has two input pins) to create a 4-pin advanced RFID IC. A 4-pin RFID IC is schematically represented in Fig. 1, where the first set of pins is connected to an antenna and the second set of pins (or additional pins) are initially unconnected. The memory of the NXP RFID IC changes if these additional pins are connected to "close a circuit" (comparable to closing the circuit between 14A and 14B in Fig. 1). Alternatively, the two additional pins can be fixedly connected to an external component such as an antenna, an inductive coil, tuning loop, tuning capacitor, etc.

In the document US 2012/126949 protocols, systems, and methods are disclosed for two or more RFID tags to communicate with each other using direct connections, wherein the two or more RFID tags are configured to mate and directly exchange identification information. A disclosed method includes detecting that a first RFID tag is connected to a second RFID tag. A first message comprising a first tag identification is sent directly from the first RFID tag to the second RFID tag, and the first RFID tag receives a first acknowledgement from the second RFID tag if the first tag identification was correctly received. A second message comprising a second tag identification may be sent directly from the second RFID tag to the first RFID tag and a second acknowledgement may be received from the first RFID tag if the second tag identification was correctly received.

Therefore, what is needed to overcome the deficiencies in the prior art is a wireless assembly validation and verification system that provides a continuous output pertaining to the state of a critical connection between a movable element and a relatively stationary element, through the use of an advanced RFID tag. Thus enabling verification when two components have been successfully joined, in which one of the components is scrutinized by an RFID signal and subsequently reports a successful assembly.

### BRIEF DESCRIPTION OF THE DRAWINGS

Figure 1 is block diagram a resonant radio frequency connection verification system with radio frequency identification (RFID) integrated circuit (IC) based on the 4-pin NXP advanced RFID IC.
Figures 2A and 2B are block diagrams of RFID IC verification system embodiments, based on the RFMicron advanced RFID IC, which detects a change in the resonant frequency due to the placement of one of the components to verify a Figure 2C is an example of a block diagram of an RFID IC verification system that does not have all the features of the independent claims but is nonetheless useful for the understanding of the invention.
Figure 3 is schematic drawing of an antenna connected to an RFID IC and a set of connector pads connected to the RFID IC.
Figure 4A is an exemplary representation of a standard fluid Quick Connector (QC) system with an RFID IC tag board non-integrally attached to the connector body.
Figure 4B is an exemplary representation of a standard fluid Quick Connector (QC) system with an RFID IC tag board integrally attached to the connector body, with the locking element in the partially engaged or unlocked state.
Figure 4C is a representation the QC system in Fig. 4B with the locking element in the fully engaged or locked state.
Figure 5 is an exemplary representation of a two wire electrical connection with an assembly verification RFID IC passive sensor to detect the successful completion of the electrical connection.

### DETAILED DESCRIPTION

With reference to the Figures, wherein like numerals indicate like parts throughout the several views, Figure 1 is a block diagram of a resonant radio frequency assembly/connection verification system 10A for a connection structure for a first embodiment based on the 4-pin NXP advanced RFID IC, as described above. The system 10 can determine if the connection between a movable element 12 and a relatively stationary member 16 is connected and in a locked state. If the connection is skewed, the movable element 12 and the relatively stationary member 16 cannot be locked. Therefore, the connection is considered to be in an unlocked state. The system 10 can determine the locked or unlocked state of the connection and generate a signal indicating whether the connection of the stationary member to the movable element is fully engaged or partially engaged (i.e., disengaged). The emitted RFID signal is detectable by a RFID reader 8 positioned proximate to the emitter of the RFID signal and determines a locked status from the RFID signal. As discussed above, RFID readers are well known in the art.

The movable element 12 of verification system 10A can be, but is not limited to an airbag clip, a quick connector locking element, or a male end or a female end of a wiring harness. Movement of the movable element 12 is relative to the relatively stationary member 16, wherein, the relatively stationary member 16 can be a B-pillar of a vehicle to which an airbag clip is mounted.

With regard to Fig. 1, the movable element 12 provides an electrical pathway 15 between a first contact 13A and a second contact 13B. When the movable element 12 is fully engaged with the relatively stationary member 16, the electrical pathway 15 of the movable element 12 completes a circuit between a pair of pins comprising of a first connector 14A and a second connector 14B. The pair of pins are both communicatively coupled to RFID IC 11. The RFID IC 11 is also communicatively coupled to third connector 17A and a fourth connector 17B. An antenna 21 is connected to the connectors 17A, 17B permitting the RFID IC 11 to communicate with the RFID reader 18.

The RFID IC 11, in operation, will determine if the movable element 12 is fully engaged with the relatively stationary member 16. This is done by assessing if the movable element 12 completes a circuit between the first and second connectors 14A, 14B by placing electrical pathway 15 in contact with the first and second connectors. If the circuit between 14A and 14B is complete, a memory cell value will be updated in the RFID IC 11 to indicate that the pathway is complete. In some circumstances, the RFID IC 11 will update a value in an external memory. The RFID IC 11 can then modulate a radio frequency signal generated by the RFID IC 11 to indicate the locked status (i.e., complete engagement or full engagement) of the movable element 12 and the relatively stationary member 16. The RFID reader 18 receives the radio frequency signal and demodulates the signal to obtain the locked status.

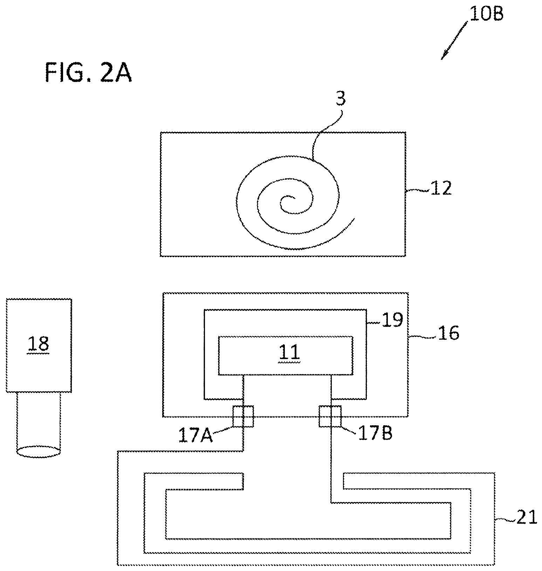

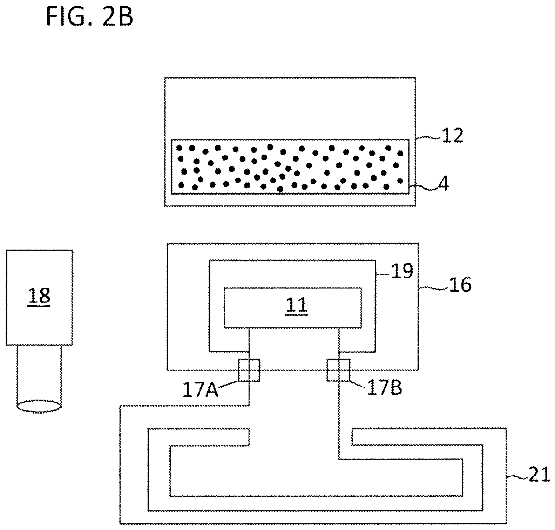

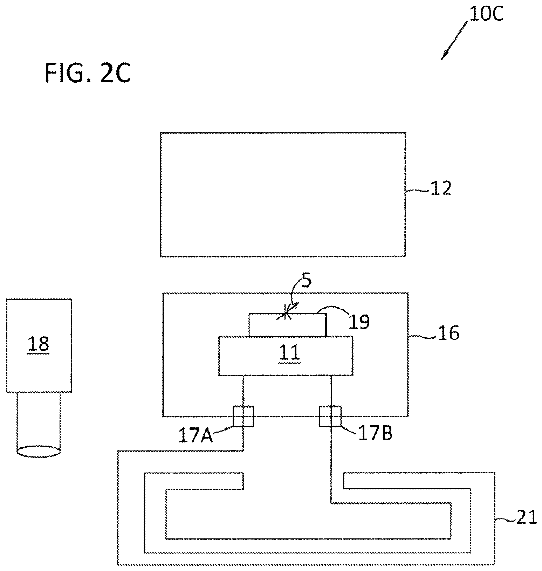

Figures 2A and 2B illustrate another embodiment of a verification system 10B and Figure 2C an example of a verification system 10B not forming part of the claimed invention, with similar functionality to the verification circuit of Figure 1, but based on the RFMicron advanced RFID IC described above. The movable element 12 of Figures 2A-2C will include either an inductive coil 3 (comprised of a single winding, multiple windings or at one or more windings) or contains regions that exhibit a high magnetic permeability value 4 as part of its assembly. A magnetically permeable material permits and enhances the formation of a magnetic field within itself, thus changing the inductance and impedance value of a coil or an antenna in the vicinity. The RFID IC 11 is commutatively coupled to the antenna 21 via connectors 17A, 17B. In addition, tuning loop 19 is commutatively coupled to, or integrated into, antenna 21 or inductive coil 3.

The RFID IC 11 in Fig. 2A includes a tuning loop 19. When a movable element 12 with an inductive coil 3 is brought closer to the relatively stationary member 16, the tuning loop 19 responds capacitively, inductively or magnetically. This leads directly to changes in the characteristic impedance of the coupled antenna 21 and tuning loop (or tuning element) 19, which in turn leads to a change in the resonant frequency of the entire RFID tag system 10. To illustrate, the RFID IC 11 will tune itself to compensate for the change in the impedance in order to maintain a desired radio frequency. The RFID IC 11 then modulates the emitted RFID signal when the component (for example, an airbag clip or QC locking element) changes from an unlocked state to a locked state (a locked status, i.e., wherein movement of the movable element from the unlocked state to the lock state leads to a change impedance of the tuning loop thereby changing a signal generated by the RFID IC and a change in at least one of a memory cell value in the RFID IC). The RFID reader 18 detects the RFID signal and demodulates the RFID signal to identify the component locked status.

The system 10 in Fig. 2B differs from the embodiment in Fig. 2A in that coil 3 is eliminated and the movable element 12 is comprised of a magnetically permeable material 4 having a relative permeability value unequal to 1 (i.e., deviating from unity). In addition, tuning loop 19 may be a single winding coil with its ends connected directly to connectors 17A, 17B. For such a configuration, when movable element 12 moves relative to the tuning loop 19, the impedance of the single winding coil changes, thus altering the impedance of the coupled antenna 21 and tuning loop19 (i.e., a subcircuit formed of antenna 21 and tuning loop 19), as well as the impedance and resonant frequency of the entire system 10. In one example, the RFID IC 11 will tune itself to compensate for the change in the impedance to maintain a desired radio frequency. The RFID IC 11 then modulates the emitted RFID signal with a component locked status. The RFID reader 18 detects the RFID signal and demodulates the RFID signal to identify the component locked status.

In addition to detecting a change in resonant frequency, the proximate placement of the tuning loop 19 to change the permeability of the RFID IC 11 frequency, as discussed above, the RFID IC 11 may detect a change in the ratio of the standing waves in the coupling of the RFID IC 11 to the antenna 21. In radio engineering and telecommunications, standing wave ratio (SWR) is derived from the impedance matching of load of the RFID IC 11 to the characteristic impedance of the antenna 21.

The system 10 in Fig. 2C replaces the tuning loop 19 in Figs. 2A and 2B with a tuning capacitor 5. If movable element 12 is a fully or at least a partially conductive material, then when movable element 12 is brought closer to the tuning capacitor, the charge capacity, or capacitance, of the capacitor 5 will change, thus altering the impedance of the coupled antenna 21. In other words, movement of the movable element 12 from the unlocked state to the lock state leads to a change in the capacitance of the tuning capacitor, and a corresponding change in the impedance of the subcircuit formed by the tuning capacitor and the antenna or the inductive coil. For example, the RFID IC 11 in Fig. 2C when attached to an airbag clip or QC locking element modulates the emitted RFID signal when the component changes from an unlocked state to a locked state or locked status (i.e., wherein movement of the movable element from the unlocked state to the lock state leads to a change impedance of the tuning capacitor thereby changing a signal generated by the RFID IC. An RFID reader 18 is then able to detect and demodulate the RFID signal to identify the component locked status.

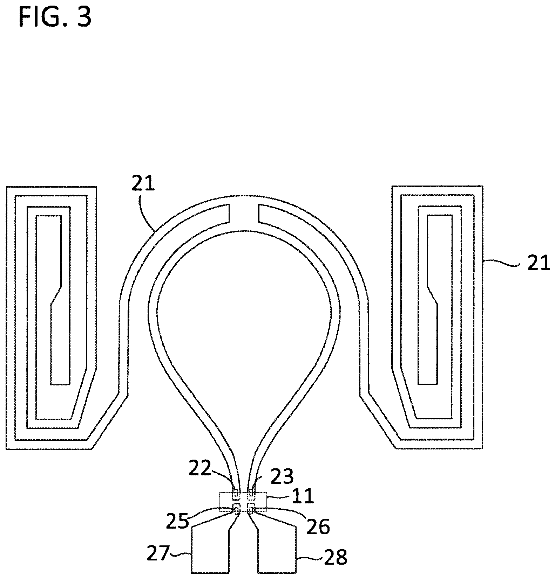

Now with reference to Figure 3, a 4-pin RFID IC 11 is shown. A first antenna connection 22 and a second antenna connection 23 are communicatively coupled to the antenna 21. A first electrical pathway connector 25 and a second electrical pathway connector 26, of the RFID IC 11, are respectively coupled to a first pad 27 and a second pad 28, which can be located on either the relatively stationary member 16 or the movable element 12.

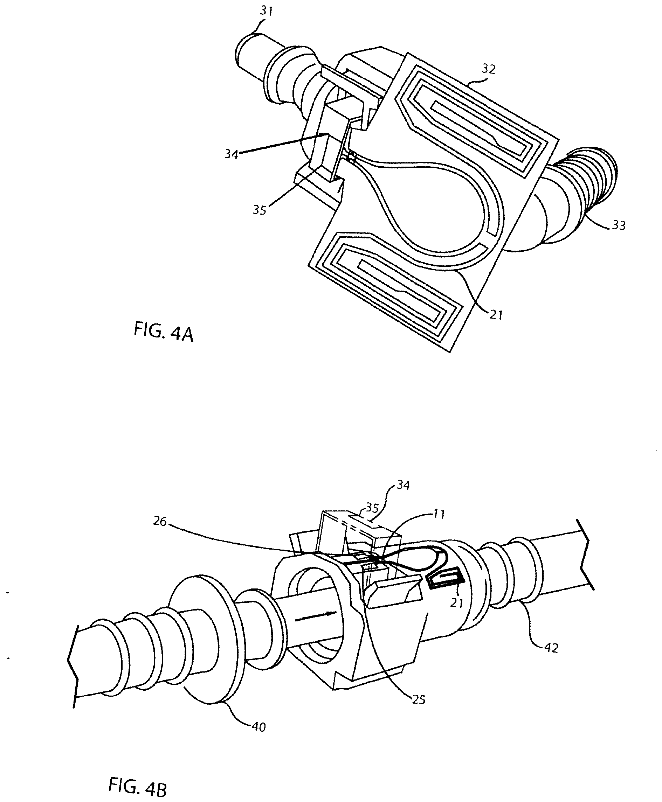

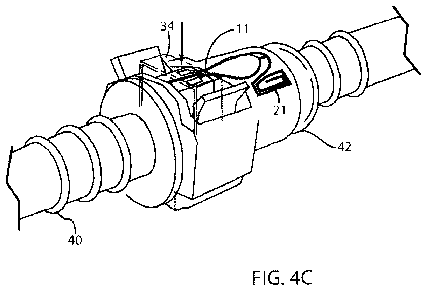

Now with reference to Figures 4A-4C. Fig. 4A shows a QC system with an RFID IC tag board 32 non-integrally attached to the connector body (i.e., RFID IC tag board is an external board). In contrast, Fig. 4B shows the RFID IC tag board 32 integrally attached to the connector body 33. The change in the locking status is represented by Figs. 4B and 4C. When fluid line endform 31 is inserted into a quick connector body 33 (Fig. 4B), the quick connector locking element 34 automatically moves from its partially engaged position to a fully engaged or locked position (Fig. 4C). Antenna 21 is incorporated into the board 32, which may include, but is not limited to, a printed circuit board consisting of the RFID IC 11. The antenna 21 is coupled to two pins of the 4-pin RFID IC 11. The second set of pins, of the RFID IC 11, is communicatively coupled to pads 27, 28 (Fig. 3). When the locking element 34 moves to the locking/engaged position, locking element 34 establishes an electrical communication with RFID IC 11 via pad 27, 28. If the locking element 34 is an electrically conductive metal, upon full engagement with pads 27, 28 an electrical circuit with RFID IC 11. The RFID IC 11 is programmed to detect the completed circuit at pads 27, 28 and the RFID IC 11 programming subsequently services an interrupt. In an alternative embodiment, the locking element 34 can be made of a nonconductive material, such as plastic, and the locking element 34 will have an electrically conductive pathway 35 (Fig. 4A) to engage the pads 27, 28 to complete an electrical circuit with RFID IC 11.

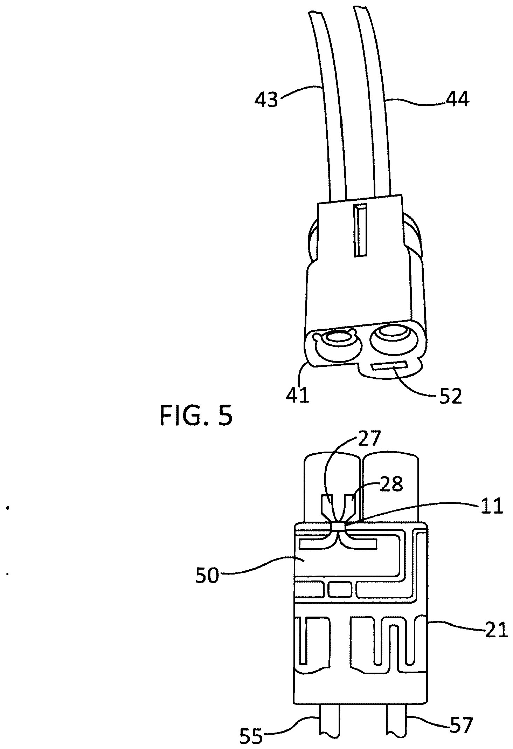

To depict another embodiment, as illustrated in Figure 5, the RFID IC 11 and the antenna 21 are deployed within a first wire connector 50 (consisting of a pair of wires 55,57). The pads 27, 28 of the first wire connector 50 are inserted into a connector slot 52 of the second wire connector 41 (consisting of wires 43, 44). Inside the connector slot 52 can be a wire, or any other electrically conductive element, to close the circuit between the two pads 27, 28 and complete an electrical circuit with RFID IC 11. Note that first wire connector 50 can be, for example, the male or female end of a wiring harness, with second wire connector 41 being a mated with a female electrical connector or a male electrical connector. The reverse male-female mating also applies.

The disclosure has been described in an illustrative manner, and it is to be understood that the terminology that has been used is intended to be in the nature of words of description rather than of limitation. Many modifications and variations of the present disclosure are possible in light of the above teachings, and the disclosure may be practiced otherwise than as specifically described.

As used herein, the adverb "substantially" modifying an adjective means that a shape, structure, measurement, value, calculation, etc. may deviate from an exact described geometry, distance, measurement, value, calculation, etc., because of imperfections in the materials, machining, manufacturing, sensor measurements, computations, processing time, communications time, etc.

With regard to the media, processes, systems, methods, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of systems and/or processes herein are provided for the purpose of illustrating certain embodiments, and should in no way be construed so as to limit the disclosed subject matter.

Accordingly, it is to be understood that the above description is intended to be illustrative and not restrictive. Many embodiments and applications other than the examples provided would be apparent to those of skill in the art upon reading the above description. The scope of the invention should be determined, not with reference to the above description, but should instead be determined with reference to claims appended hereto. It is anticipated and intended that future developments will occur in the arts discussed herein, and that the disclosed systems and methods will be incorporated into such future embodiments. In sum, it should be understood that the disclosed subject matter is capable of modification and variation.

## Claims

1. A connection verification system (10), comprising:
a movable element (12) in contact with a stationary member (16), wherein the movable element (12) configured to be partially engaged with the stationary member (16) in an unlocked state and fully engaged with the stationary member in a locked state a radio frequency identification, RFID, integrated circuit, IC (11), attached to at least one of the movable element (12) and the stationary member (16);
a first pair of pins (17A, 17B) communicatively coupled to the RFID IC (11), and further coupled to at least one of an antenna (21) and an inductive coil (3);
a second pair of pins (14A, 14B) communicatively coupled to the RFID IC (11), wherein movement of the movable element (12) from the unlocked state to the lock state leads to an establishment of an electrical circuit between, the RFID IC (11) being configured such that, when an electrical circuit is established between the second pair of pins, it results in a change in at least one of a memory cell value in the RFID IC (11) and a signal generated by the RFID IC (11); and
an RFID reader (18) positioned proximate to the RFID IC (11) and configured to detect the change in the signal generated by the RFID IC (11),
**characterized in that**
the movable element (12) includes an electrical pathway (15) wherein the electrical pathway (15) of the movable element (12) in the locked state engages the second pair of pins of the RFID IC.

2. The connection verification system of claim 1, wherein the movable element (12) is selected from a quick connector locking element (34), an airbag clip, a male electrical connector or a female electrical connector

3. The connection verification system (10) of claim 1, wherein the RFID IC (11) is configured to be programmed with a unique identification.

4. The connection verification system (10) of claim 3, wherein the RFID IC (11) is configured to be programmed to modulate the signal generated with the unique identification

5. A connection verification system (10), comprising:
a movable element (12);
a stationary member (16), wherein the movable element (12) is configured to be partially engaged with the stationary member (16) in an unlocked state and fully engaged with the stationary member (16) in a locked state;
a radio frequency identification, RFID, integrated circuit, IC (11), attached to at least one of the movable element (12) and the stationary member (16);
a pair of pins (17A, 17B) communicatively coupled to the RFID IC (11), and further coupled to at least one of an antenna (21) and an inductive coil;
a tuning loop (19) communicatively coupled to, or integrated into, the antenna (21) or inductive coil (3);
a coil or a component (4) with a relative permeability value unequal to 1 physically coupled to the movable element (12), and and configured to be wirelessly coupled to the tuning loop (19)
wherein movement of the movable element (12) from the unlocked state to the lock state leads to a change in a impedance of the tuning loop, the RFID IC (11) being configured such that, when the impedance of the tuning loop changes, it results in a change of a signal generated by the RFID IC (11) and a change in at least one of a memory cell value in the RFID IC (11); and
an RFID reader (18) positioned proximate to the RFID IC (11) and configured to detect the change in the signal generated by the RFID IC.

6. The connection verification system (10) of claim 5 and wherein the movable element (12) is selected from a quick connector locking element (34), an airbag clip, a male electrical connector or a female electrical connector

7. The connection verification system (10) of claim 5, wherein the tuning loop is selected from an electrical pathway (19), a single winding coil or an inductive coil with at least one winding.

8. The connection verification system (10) of claim 7, wherein the tuning loop (19) is communicatively coupled to the pair of pins.

## Patentansprüche

1. Verbindungsüberprüfungssystem (10), umfassend:
ein bewegliches Element (12) in Kontakt mit einem stationären Element (16), wobei das bewegliche Element (12) konfiguriert ist, um teilweise in Eingriff mit dem stationären Element (16) in einem entriegelten Zustand und vollständig in Eingriff mit dem stationären Element in einem verriegelten Zustand zu sein,
einen integrierten Funkfrequenzidentifikations-, RFID-Schaltkreis, IC (11), angebracht an zumindest einem von dem beweglichen Element (12) und dem stationären Element (16),
ein erstes Paar Stifte (17A, 17B), das kommunikativ an den RFID-IC (11) gekoppelt und ferner an zumindest eines von einer Antenne (21) und einer Induktionsspule (3) gekoppelt ist,
ein zweites Paar Stifte (14A, 14B), das kommunikativ an den RFID-IC (11) gekoppelt ist, wobei Bewegung des beweglichen Elements (12) aus dem entriegelten Zustand in den verriegelten Zustand zu einer Herstellung eines elektrischen Schaltkreises dazwischen führt, wobei der RFID-IC (11) konfiguriert ist, sodass, wenn ein elektrischer Schaltkreis zwischen dem zweiten Paar Stifte hergestellt ist, er zu einer Änderung in zumindest einem von einem Speicherzellenwert in dem RFID-IC (11) und einem Signal führt, das durch den RFID-IC (11) erzeugt wird, und
einen RFID-Leser (18), der nahe dem RFID-IC (11) positioniert und konfiguriert ist, um die Änderung in dem Signal zu erfassen, das durch den RFID-IC (11) erzeugt wird,
**dadurch gekennzeichnet, dass**
das bewegliche Element (12) einen elektrischen Pfad (15) beinhaltet, wobei der elektrische Pfad (15) des beweglichen Elements (12) in dem verriegelten Zustand das zweite Paar Stifte des RFID-IC in Eingriff nimmt.

2. Verbindungsüberprüfungssystem nach Anspruch 1, wobei das bewegliche Element (12) aus einem Schnellverbinderverriegelungselement (34), einem Airbag-Clip, einem elektrischen Stecker oder einer elektrischen Buchse ausgewählt ist.

3. Verbindungsüberprüfungssystem (10) nach Anspruch 1, wobei der RFID-IC (11) konfiguriert ist, um mit einer eindeutigen Identifikation programmiert zu sein.

4. Verbindungsüberprüfungssystem (10) nach Anspruch 3, wobei der RFID-IC (11) konfiguriert ist, um programmiert zu sein, um das Signal zu modulieren, das mit der eindeutigen Identifikation erzeugt ist.

5. Verbindungsüberprüfungssystem (10), umfassend:
ein bewegliches Element (12);
ein stationäres Element (16), wobei das bewegliche Element (12) konfiguriert ist, um teilweise in Eingriff mit dem stationären Element (16) in einem entriegelten Zustand zu sein und vollständig in Eingriff mit dem stationären Element (16) in einem verriegelten Zustand zu sein,
einen integrierten Funkfrequenzidentifikations-, RFID-Schaltkreis, IC (11), der an zumindest einem von dem beweglichen Element (12) und dem stationären Element (16) angebracht ist,
ein Paar Stifte (17A, 17B), kommunikativ an den RFID-IC (11) gekoppelt und ferner an zumindest eines von einer Antenne (21) und einer Induktionsspule gekoppelt;
eine Abstimmschleife (19), die kommunikativ an die Antenne (21) oder die Induktionsspule (3) gekoppelt oder dann integriert ist,
eine Spule oder eine Komponente (4) mit einem relativen Permeabilitätswert ungleich 1, die physisch an das bewegliche Element (12) gekoppelt und konfiguriert ist, um drahtlos an die Abstimmschleife (19) gekoppelt zu sein,
wobei Bewegung des beweglichen Elements (12) aus dem entriegelten Zustand in den verriegelten Zustand zu einer Änderung in einer Impedanz der Abstimmschleife führt, wobei der RFID-IC (11) konfiguriert ist, sodass, wenn sich die Impedanz der Abstimmschleife ändert, es zu einer Änderung eines Signals, das durch den RFID-IC (11) erzeugt wird, und einer Änderung in zumindest einem von einem Speicherzellenwert in dem RFID-IC (11) führt, und
einen RFID-Leser (18), der nahe dem RFID-IC (11) positioniert und konfiguriert ist, um die Änderung in dem Signal zu erfassen, das durch den RFID-IC erzeugt wird.

6. Verbindungsüberprüfungssystem (10) nach Anspruch 5 und wobei das bewegliche Element (12) aus einem Schnellverbinderverriegelungselement (34), einem Airbag-Clip, einem elektrischen Stecker oder einer elektrischen Buchse ausgewählt ist.

7. Verbindungsüberprüfungssystem (10) nach Anspruch 5, wobei die Abstimmschleife aus einem elektrischen Pfad (19), einer Spule mit einer einzelnen Wicklung oder einer Induktionsspule mit zumindest einer Wicklung ausgewählt ist.

8. Verbindungsüberprüfungssystem (10) nach Anspruch 7, wobei die Abstimmschleife (19) kommunikativ an das Paar Stifte gekoppelt ist.

## Revendications

1. Système de vérification de connexion (10), comprenant :
un élément mobile (12) en contact avec un organe stationnaire (16), ledit élément mobile (12) étant configuré pour être partiellement en prise avec l'organe stationnaire (16) dans un état déverrouillé et entièrement en prise avec l'organe stationnaire dans un état verrouillé, un circuit intégré, CI, d'identification par radiofréquence, RFID, (11), fixé à au moins un élément parmi l'élément mobile (12) et l'organe stationnaire (16) ;
une première paire de broches (17A, 17B) couplée en communication au CI RFID (11), et couplée en outre à au moins un élément parmi une antenne (21) et une bobine d'induction (3) ;
une seconde paire de broches (14A, 14B) couplée en communication au CI RFID (11), le mouvement de l'élément mobile (12) de l'état déverrouillé à l'état verrouillé conduisant à l'établissement d'un circuit électrique entre, le CI RFID (11) étant configuré de sorte que, lorsqu'un circuit électrique est établi entre la seconde paire de broches, il conduise à un changement d'au moins un élément parmi
une valeur de cellule mémoire dans le CI RFID (11) et un signal généré par le CI RFID (11) ; et
un lecteur RFID (18) positionné à proximité du CI RFID (11) et configuré pour détecter le changement du signal généré par le CI RFID (11),
**caractérisé en ce que**
l'élément mobile (12) comprend un chemin électrique (15) ledit chemin électrique (15) de l'élément mobile (12) dans l'état verrouillé venant en prise avec la seconde paire de broches du CI RFID.

2. Système de vérification de connexion selon la revendication 1, ledit élément mobile (12) étant choisi parmi un élément de verrouillage de connecteur rapide (34), un clip d'airbag, un connecteur électrique mâle ou un connecteur électrique femelle.

3. Système de vérification de connexion (10) selon la revendication 1, ledit CI RFID (11) étant configuré pour être programmé avec une identification unique.

4. Système de vérification de connexion (10) selon la revendication 3, ledit CI RFID (11) étant configuré pour être programmé pour moduler le signal généré avec l'identification unique.

5. Système de vérification de connexion (10), comprenant :
un élément mobile (12) ;
un organe stationnaire (16), ledit élément mobile (12) étant configuré pour être partiellement en prise avec l'organe stationnaire (16) dans un état déverrouillé et entièrement en prise avec l'organe stationnaire (16) dans un état verrouillé ;
un circuit intégré, CI, d'identification par radiofréquence, RFID, (11), fixé à au moins un élément parmi l'élément mobile (12) et l'organe stationnaire (16) ;
une paire de broches (17A, 17B) couplée en communication au CI RFID (11), et couplée en outre à au moins un élément parmi une antenne (21) et une bobine d'induction ;
une boucle de syntonisation (19) couplée en communication à, ou intégrée dans, l'antenne (21) ou la bobine d'induction (3) ;
une bobine ou un composant (4) avec une valeur de perméabilité relative différente de 1 couplé physiquement à l'élément mobile (12), et et configuré pour être couplé sans fil à la boucle de syntonisation (19),
ledit mouvement de l'élément mobile (12) de l'état déverrouillé à l'état verrouillé conduisant à un changement d'impédance de la boucle de syntonisation, le CI RFID (11) étant configuré de sorte que, lorsque l'impédance de la boucle de syntonisation change, il entraîne un changement de signal généré par le CI RFID (11) et un changement d'au moins une valeur parmi une valeur de cellule de mémoire dans le CI RFID (11) ; et
un lecteur RFID (18) positionné à proximité du CI RFID (11) et configuré pour détecter le changement du signal généré par le CI RFID.

6. Système de vérification de connexion (10) selon la revendication 5 et ledit élément mobile (12) étant choisi parmi un élément de verrouillage de connecteur rapide (34), un clip d'airbag, un connecteur électrique mâle ou un connecteur électrique femelle.

7. Système de vérification de connexion (10) selon la revendication 5, ladite boucle de syntonisation étant choisie parmi un chemin électrique (19), une bobine à un seul enroulement ou une bobine d'induction avec au moins un enroulement.

8. Système de vérification de connexion (10) selon la revendication 7, ladite boucle de syntonisation (19) étant couplée en communication à la paire de broches.
